# EUROPEAN PATENT APPLICATION

(11) **EP 3 919 818 A1**
(43) Date of publication of application: **08.12.2021**
(21) Application number: 21172514.8
(22) Date of filing: 06.05.2021
(51) Int. Cl.: F24C 3/12, F24C 15/14

(54) **ENERGY GATHERING COVER OF GAS COOKTOP, POT HOLDER OF GAS COOKTOP, AND GAS COOKTOP**

(30) Priority: 03.06.2020 CN 202020998049 U
(71) Applicant: BSH Hausgeräte GmbH, 81739 München (DE)
(72) Inventor: Fang, Li, Qian Shan Town (CN); Yang, Lei, Nanjing, 210000 (CN); Qiao, Wang, Nanjing, 210046 (CN)

(57) **Abstract**

Embodiments of this application relate to an energy gathering cover of a gas cooktop, a pot holder of a gas cooktop, and a gas cooktop. An energy gathering cover (10) of the gas cooktop includes a groove (100) extending annularly, the energy gathering cover (10) further includes a spilling-fluid detection end (110), and the spilling-fluid detection end (110) is disposed in the groove (100). A gas cooktop includes a burner (2) and a gas valve (3). The gas cooktop further includes the energy gathering cover (10), disposed surrounding the burner (2) of the gas cooktop; and a control device (4), configured to control the gas valve (3) to switch off the gas or reduce the flow rate of the gas when the spilling-fluid detection end (110) detects that there is fluid in the groove (100). Therefore, when there is fluid spilling, the spilling-fluid detection end detects that there is fluid, and the control device controls the gas valve to switch off the gas or reduce the flow rate of the gas to prevent further fluid spilling in time.

## Description

### BACKGROUND

### Technical Field

This application relates to the field of the gas cooktops, and in particular, to an energy gathering cover of a gas cooktop, a pot holder of a gas cooktop, and a gas cooktop.

### Related Art

At present, there is no gas cooktop product with a spilling-proof function or a spilling detection function on the market. In the cooking process such as cooking soup or stewing, if the consumer does not adjust the fire level in time, water or soup in a cooking appliance easily spills, which may cause cleaning troubles. This becomes a sore point for consumers. In particular, cooking methods like soup cooking or stewing take a long time, and the consumer wants to avoid spilling of the soup without staying by the stove with boredom.

Unless there is sufficient evidence, the prior art described herein does not mean that it is recognized that the prior art is well known to those of ordinary skill in the art to which this application relates before the filing date of this application.

### SUMMARY

An object of this application is to provide an improved energy gathering cover of a gas cooktop, an improved pot holder of a gas cooktop, and an improved gas cooktop, to resolve the technical problems.

Another object of this application is to provide a gas cooktop with a spilling detection function, to resolve the technical problems.

Another object of this application is to provide a gas cooktop that can prevent the spilling from getting worse in time when a fluid spills during cooking, to resolve the technical problems.

An aspect of embodiments of this application relates to an energy gathering cover of a gas cooktop. The energy gathering cover includes a groove extending annularly. The energy gathering cover further includes a spilling-fluid detection end, and the spilling-fluid detection end is disposed in the groove.

The energy gathering cover in the foregoing solution is arranged around the burner of the gas cooktop in a use state. When there is fluid spilling during cooking, the energy gathering cover may collect a certain amount of spilling fluid, which is convenient for pouring and cleaning. More importantly, the energy gathering cover has a spilling detection function, which can be used on a gas cooktop to remind the user or control the gas supply to prevent continuous fluid spilling.

In recent years, the structural design of the surface of the gas cooktop in the kitchen tends to be flattened and simplified. For many gas cooktops,
a fluid pan is omitted, but the trouble caused by fluid spilling cannot be avoided. With the energy gathering cover of this application, a corresponding gas cooktop not only omits the fluid pan, but also prevents the continuous spilling of fluid.

The spilling-fluid detection end in the foregoing solution may include an electrode, such as a metal electrode or an insulated electrode. Certainly, the solution of this application is not limited to this, and the spilling-fluid detection end may include other materials suitable for fluid detection.

An outer contour of the energy gathering cover of this application may be in a circular ring shape, but is not limited to this; alternatively, the outer contour of the energy gathering cover may be in a polygonal shape, such as a quadrilateral or a hexagon.

The energy gathering cover of this embodiment may be installed on the gas cooktop as a separate component, or may be assembled with other components such as a pot holder and then installed on the gas cooktop together.

Another aspect of the embodiments of this application relates to a gas cooktop. The gas cooktop includes a burner; a gas valve, configured to control the switch-on, switch-off, and flow rate of gas supplied to the burner; and the gas cooktop further includes the energy gathering cover of the gas cooktop, disposed surrounding the burner; and a control device, configured to control the gas valve to switch off the gas or reduce the flow rate of the gas when the spilling-fluid detection end detects that there is fluid in the groove.

Therefore, when fluid spilling starts, the groove of the energy gathering cover collects the spilling fluid, the spilling-fluid detection end disposed in the groove detects that there is fluid, and the control device controls the gas valve to switch off the gas or reduce the flow rate of the gas. In this case, the spilling is alleviated or the fluid is stopped from further spilling in time, and the fluid is prevented from continuously or more violently spilling to contaminate the gas cooktop and cause cleaning burden to the user, or cause a cooking failure. With the gas cooktop of this scheme, a fluid pan can also be omitted.

An embodiment of this application relates to a gas cooktop. The gas cooktop includes a burner; a gas valve, configured to control the switch-on, switch-off, and flow rate of gas supplied to the burner; and the gas cooktop further includes an energy gathering cover, disposed surrounding the burner, where the energy gathering cover includes a groove extending annularly; and a spilling-proof safety device, configured to trigger the gas valve to switch off the gas or reduce the flow rate of the gas when it is detected that there is fluid in the groove.

Therefore, when fluid spilling starts, the groove of the energy gathering cover collects the fluid, the spilling-proof safety device triggers the gas valve to switch off the gas or reduce the flow rate of the gas when it is detected that there is fluid in the groove, so as to prevent the spilling from getting worse in time and prevent the gas cooktop from being contaminated.

In the phrase "a spilling-proof safety device, configured to detect that there is fluid in the groove", a detection type is not limited, which can be a contact detection.

For example, the fluid may be detected by electrodes arranged in the groove. Alternatively, the detection type may be a non-contact detection, such as an image detection or an infrared detection.

Another embodiment of this application relates to a pot holder of a gas cooktop. The pot holder includes an annular body and a plurality of supporting feet connected to the annular body, the supporting feet are configured to support a cooking appliance, and the annular body includes a groove extending annularly; and the pot holder further includes a spilling-fluid detection end, and the spilling-fluid detection end is disposed in the groove.

The beneficial effect of the scheme is that: the pot holder may be used to collect a certain amount of spilling fluid. When there is a small amount of fluid spilling, the fluid is collected by the pot holder and fluid spilling is detected, to remind the user or control the gas supply to prevent further fluid spilling.

With the pot holder of this application, the fluid pan is omitted in the corresponding gas cooktop, and the problem of spilling is avoided.

In an embodiment of this application, the annular body and the supporting feet are detachably connected.

In another embodiment of this application, the annular body and the supporting feet are fixedly connected such as by welding, or the annular body and the supporting feet are integrally connected, that is, integrally formed.

In an embodiment of this application, the spilling-fluid detection end includes at least one pair of electrodes, and top ends of the electrodes protrude from an inner surface of the groove. Therefore, when there is fluid spilling, the fluid wets the top ends of the electrodes, and then it can be determined whether there is fluid spilling by checking a change of a signal between the at least one pair of electrodes, such as the change of a current value or a resistance value.

In an embodiment of this application, the spilling-fluid detection end includes two metal electrodes without contact with each other and an insulated housing wrapping the electrodes, and top ends of the electrodes extend out of the housing. Because pot holders are mostly made of metal, such as cast iron, the electrodes made of metal requires an insulated housing to insulate the electrodes from the pot holder. In an embodiment, the housing may be made of ceramics.

In an embodiment of this application, the pot holder further includes a connection portion electrically connected to the spilling-fluid detection end, and the connection portion protrudes downwards from the annular body. The connection portion is configured to be electrically connected to relevant parts of the gas cooktop, so as to transmit the signal detected by the spilling-fluid detection end to the relevant parts of the gas cooktop. The relevant parts are usually arranged inside the gas cooktop, and the downwardly protruding connection portion is conveniently in contact or connection with the inside of the gas cooktop when the pot holder is in use. The connection portion may be formed integrally with the spilling-fluid detection end, or the two may be manufactured separately and then connected, which are both feasible.

In an embodiment of this application, the connection portion is column-shaped. Therefore, after the pot holder is disposed around the burner, the column-shaped connection portion is easily electrically connected to the inside of the gas cooktop by contact or plugging, and transmits a signal detected by the spilling-fluid detection end to a relevant part disposed inside the gas cooktop, such as a control device.

In an embodiment of this application, the connection portion is electrically connected to the inside of the gas cooktop in a plugging or contact manner.

Because fluid spills from various positions of a cooking appliance, to detect a small amount of spilling in a timely and accurate manner and to remind the user or to alleviate spilling or prevent violent spilling, in an embodiment of this application, the spilling-fluid detection end includes a plurality of pairs of electrodes disposed at intervals.

In an embodiment of this application, the annular body includes a cavity portion, a wire cable is arranged in the cavity portion, and the wire cable is configured to electrically connect the plurality of pairs of electrodes to the connection portion. There is air inside the cavity portion, which achieves the effect of heat insulation, and better prevents the heat of the burner from being lost to the outside, thereby helping improve the thermal efficiency of the burner. In addition, the wire cable may be arranged to connect a plurality of pairs of electrodes, so as to detect the spilling timely and accurately, even if there is only a small amount of spilling fluid.

An embodiment of this application relates to a gas cooktop. The gas cooktop includes a burner; a gas valve, configured to control the switch-on, switch-off, and flow rate of gas supplied to the burner; and the gas cooktop further includes a pot holder of the gas cooktop in any one of the foregoing embodiments, the pot holder being disposed surrounding the burner; and a control device, configured to control the gas valve to switch off the gas or reduce the flow rate of the gas when the spilling-fluid detection end detects that there is fluid in the groove.

Therefore, when the fluid starts to spill, the spilling fluid is collected by the pot holder, the spilling-fluid detection end detects that there is fluid in the groove, and the control device controls the gas valve to switch off the gas or reduce the flow rate of the gas, so as prevent the fluid of the cooking appliance from further spilling, thereby preventing a cleaning problem or a cooking failure.

Another embodiment of this application relates to a gas cooktop. The gas cooktop includes a burner; a gas valve, configured to control the switch-on, switch-off, and flow rate of gas supplied to the burner; and a pot holder, disposed surrounding the burner, where the pot holder includes an annular body and a plurality of supporting feet connected to the annular body, the supporting feet are configured to support a cooking appliance, and the annular body includes a groove extending annularly; and the gas cooktop further includes a spilling-proof safety device, configured to trigger the gas valve to switch off the gas or reduce the flow rate of the gas when it is detected that there is fluid in the groove.

With the gas cooktop of this solution, when the fluid starts to spill into the groove, the spilling-proof safety device can trigger the gas cooktop to switch off the gas or reduce the flow rate of the gas, thereby preventing further spilling.

It is to be pointed out that features of dependent claims may be combined with each other in any way and with features of independent claims without departing from the concept of this application.

### BRIEF DESCRIPTION OF THE DRAWINGS

FIG. 1 is a perspective view of an energy gathering cover of a gas cooktop according to an embodiment of this application;
FIG. 2 is a partial cross-sectional view of the energy gathering cover shown in FIG. 1;
FIG. 3 is a perspective view of a pot holder of a gas cooktop according to an embodiment of this application;
FIG. 4 is a partial cross-sectional view of the pot holder shown in FIG. 3;
FIG. 5 is a perspective view of a gas cooktop according to an embodiment of this application; and
FIG. 6 is a schematic diagram of a circuit connection of a spilling-fluid detection end of a gas cooktop according to an embodiment of this application.

### Reference numerals:

1. Gas cooktop; 2. Burner; 3. Gas valve; 4. Control device; 5. Pot holder; 6. Panel; 7. Bottom housing; 10. Energy gathering cover; 100. Groove; 101. Wire cable; 110. Spilling-fluid detection end; 111. Electrode; 112. Housing; 120. Connection portion; 121. Connection terminal; 200. Cavity portion; 420. Socket; 10a. Outer ring portion; and 10b. Inner ring portion.

### DETAILED DESCRIPTION

For a further understanding of the objectives, structures, features and functions of this application, a detailed description is made below in cooperation with embodiments.

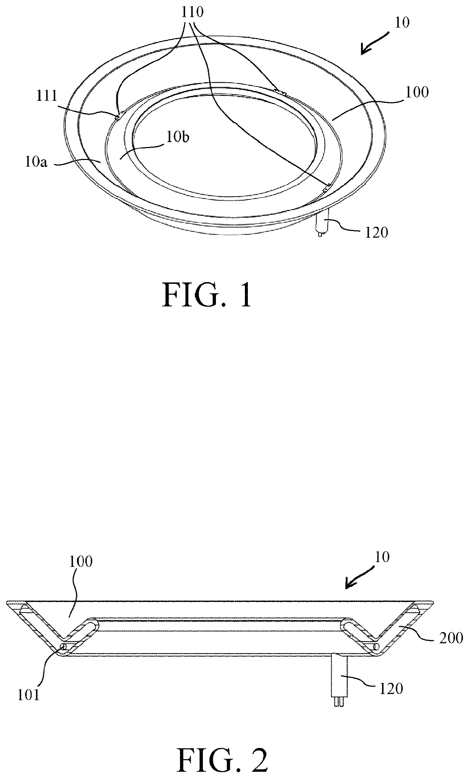

Referring to FIG. 1 and FIG. 2, FIG. 1 is a perspective view of an energy gathering cover of a gas cooktop according to an embodiment of this application; and FIG. 2 is a partial cross-sectional view of the energy gathering cover shown in FIG. 1.

This embodiment relates to an energy gathering cover of a gas cooktop. An outer contour of the energy gathering cover 10 is annular and is made of cast iron. The energy gathering cover 10 includes a groove 100 extending annularly, the energy gathering cover 10 further includes a spilling-fluid detection end 110, and the spilling-fluid detection end 110 is disposed in the groove 100.

As shown in FIG. 1, the energy gathering cover 10 includes an outer ring portion 10a and an inner ring portion 10b that are connected, and the outer ring portion 10a and the inner ring portion 10b are connected together by welding, thereby forming the groove 100 that is in the shape of a concave ring, which may be used for collecting spilling fluid. Specifically, as shown in FIG. 2, a vertical cross-section of the groove 100 of this embodiment is V-shaped.

The spilling-fluid detection end 110 includes four pairs of electrodes 111, and one of the pairs of electrodes is blocked in FIG. 1 due to the angle of vision. Top ends of the electrodes 111 protrude from an inner surface of the groove 100. The energy gathering cover 10 further includes a connection portion 120 electrically connected to the spilling-fluid detection end 110, and the connection portion 120 protrudes downwards from the energy gathering cover 10.

As shown in FIG. 2, the energy gathering cover 10 includes a cavity portion 200, a wire cable 101 is arranged in the cavity portion 200, and the wire cable 101 is configured to electrically connect the four pairs of electrodes 111 to the connection portion 120. The two electrodes in each pair of electrodes are not in contact with each other.

The energy gathering cover 10 of this embodiment is installed on the gas cooktop as a separate component in a use state, and is disposed as a cover outside the burner of the gas cooktop, so as to prevent the heat of the burner from being lost to the outside and play a role of gathering energy. An air layer formed in the cavity portion 200 allows the energy gathering cover 10 to achieve a better heat insulation effect, and further prevents the heat loss of the burner, so that the energy gathering cover achieves better energy gathering effect. In addition, because the cavity portion 200 is filled with air, the temperature in the cavity portion is relatively low, which is suitable for housing the wire cable.

When the energy gathering cover 10 is disposed on the gas cooktop, the connection portion 120 is plugged to the inside of the gas cooktop, so as to electrically connect the spilling-fluid detection end to the inside of the gas cooktop. A detection signal of the spilling-fluid detection end 110 is transmitted to relevant parts disposed inside the gas cooktop, to remind the user or control the gas cooktop.

An embodiment of this application relates to a gas cooktop. The gas cooktop includes a burner, a gas valve, a control device, and the energy gathering cover 10 as described above. The gas valve is configured to control the switch-on, switch-off, and flow rate of gas supplied to the burner. The energy gathering cover 10 is disposed surrounding the burner of the gas cooktop. The control device is configured to control the gas valve to switch off the gas or reduce the flow rate of the gas when the spilling-fluid detection end 110 detects that there is fluid in the groove 100.

When the fluid spilling starts, the spilling-fluid detection end in the groove is in contact with the fluid, and at least one of the four pairs of electrodes is in contact with the fluid. A conduction current is generated between the at least one pair of electrodes, so that a detection signal is generated and transmitted to the control device. The control device controls the gas valve to switch off the gas or reduce the flow rate of the gas to alleviate the spilling or stop the fluid from further spilling in time.

Another embodiment of this application relates to a gas cooktop. The gas cooktop includes a burner, a gas valve, an energy gathering cover, and a spilling-proof safety device. The gas valve is configured to control the switch-on, switch-off, and flow rate of gas supplied to the burner. The energy gathering cover is disposed surrounding the burner. The energy gathering cover includes a groove 100 extending annularly. The spilling-proof safety device is configured to trigger the gas valve to switch off the gas or reduce the flow rate of the gas when it is detected that there is fluid in the groove 100.

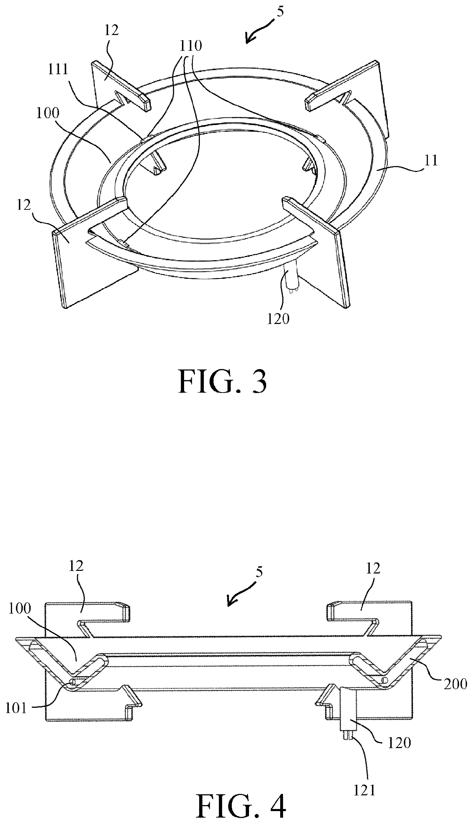

Referring to FIG. 3 and FIG. 4, FIG. 3 is a perspective view of a pot holder of a gas cooktop according to an embodiment of this application; and FIG. 4 is a partial cross-sectional view of the pot holder shown in FIG. 3.

This embodiment relates to a pot holder of a gas cooktop. The pot holder 5 includes an annular body 11 and a plurality of supporting feet 12 connected to the annular body 11. The pot holder 5 in this embodiment includes four supporting feet 12, which are configured to support a cooking appliance. The annular body 11 includes a groove 100 extending annularly.

The pot holder 5 further includes a spilling-fluid detection end 110, and the spilling-fluid detection end 110 is disposed in the groove 100.

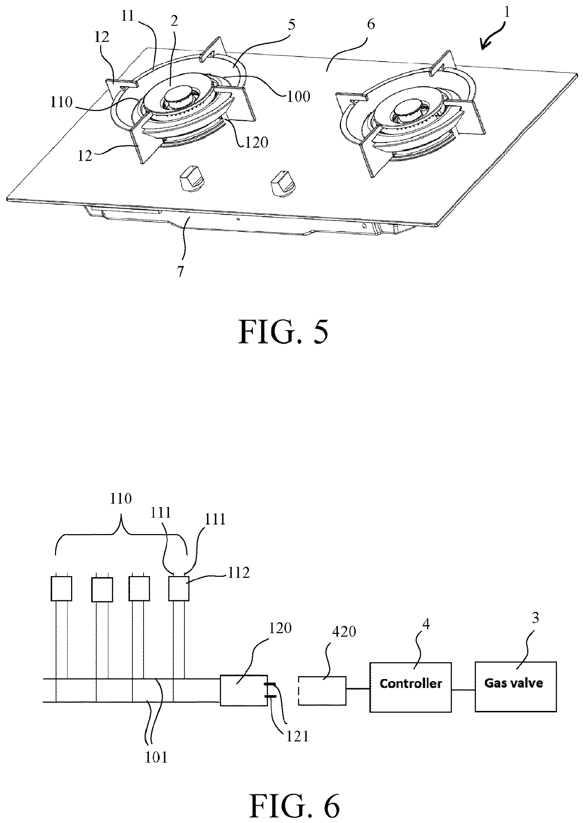

The annular body 11 and the supporting feet 12 in this embodiment are connected by welding. The spilling-fluid detection end 110 includes a plurality of pairs of electrodes 111 disposed at intervals, where the plurality of pairs of electrodes are arranged in the groove 100 at equal intervals. Top ends of the electrodes 111 protrude from an inner surface of the groove 100. Specifically, referring to FIG. 6 first, in this embodiment, each pair of electrodes is formed by two metal electrodes 111 without contact with each other, each pair of electrodes 111 is wrapped by an insulated housing 112, and top ends of the electrodes 111 extend out of the housing 112. In this embodiment, the housing 112 is a ceramic housing.

The pot holder 5 further includes a connection portion 120 electrically connected to the spilling-fluid detection end 110, where the connection portion 120 is column-shaped and protrudes downwards from the annular body 11. The connection portion 120 includes a connection terminal 121, and the connection portion 120 is electrically connected to the inside of the gas cooktop through the connection terminal 121 in a plugging manner.

As shown in FIG. 4, the annular body 11 includes a cavity portion 200, a wire cable 101 is arranged in the cavity portion 200, and the wire cable 101 is configured to electrically connect the plurality of pairs of electrodes 111 to the connection portion 120. The pot holder 5 of this embodiment surrounds the burner of the gas cooktop in a use state, and the annular body 11 can prevent the heat of the burner from being lost to the outside, and play a role of gathering energy. Because the cavity portion 200 is filled with air, the energy gathering cover 10 has a better heat insulation effect, and further prevents the heat loss of the burner, thereby exhibiting a better energy gathering effect.

An embodiment of this application relates to a gas cooktop. Referring to FIG. 5 and FIG. 6, FIG. 5 is a perspective view of a gas cooktop according to an embodiment of this application; and FIG. 6 is a schematic diagram of a circuit connection of a spilling-fluid detection end of a gas cooktop according to an embodiment of this application. The gas cooktop 1 includes a burner 2, a gas valve 3, a control device 4, and the pot holder 5 described in the foregoing embodiments. The gas valve 3 is configured to control the switch-on, switch-off, and flow rate of gas supplied to the burner 2. The pot holder 5 is disposed surrounding the burner 2. The control device 4 is configured to control the gas valve 3 to switch off the gas or reduce the flow rate of the gas when the spilling-fluid detection end 110 detects that there is fluid in the groove 100.

The gas cooktop 1 includes a panel 6 and a bottom housing 7, and the panel 6 is covered on the bottom housing 7. The space enclosed by the panel 6 and the bottom housing 7 is defined as the inside of the gas cooktop 1.

The gas valve 3 and the control device 4 are arranged inside the gas cooktop 1.

The spilling-fluid detection end 110 of this embodiment includes four pairs of electrodes 111, and each pair of electrodes is connected to the connection portion 120 through a wire cable 101 housed in the cavity portion 200. When the pot holder 5 is disposed on the panel 6 of the gas cooktop 1, the connection portion 120 extends into the inside of the gas cooktop 1, as shown in FIG. 6. The connection portion 120 includes a connection terminal 121. The connection portion 120 extends into the inside of the gas cooktop 1 and is electrically connected, through the connection terminal 121, to a socket 420 located inside the gas cooktop 1. The socket 420 is connected to the control device 4, and the control device 4 is connected to the gas valve 3.

Therefore, when a fluid spills from a cooking appliance during cooking, such as soup cooking, the spilling fluid flows to the groove 100. At least one pair of electrodes 111 in the spilling-fluid detection end 110 is in contact with the fluid, a conduction current is generated between the two electrodes 111, and a corresponding detection signal is transmitted to the control device 4 through the connection portion 120. After receiving the detection signal, the control device 4 controls the gas valve 3 to switch off the gas or controls the gas valve 3 to reduce the flow rate of the gas to prevent fluid from further spilling.

Another embodiment of this application relates to a gas cooktop. The gas cooktop includes a burner 2, a gas valve 3, and a pot holder 5. The gas valve 3 is configured to control the switch-on, switch-off, and flow rate of gas supplied to the burner 2. The pot holder 5 is disposed surrounding the burner 2. The pot holder 5 includes an annular body 11 and a plurality of supporting feet 12 connected to the annular body 11, the supporting feet 12 are configured to support a cooking appliance, and the annular body 11 includes a groove 100 extending annularly. The gas cooktop further includes a spilling-proof safety device, and the spilling-proof safety device is configured to trigger the gas valve 3 to switch off the gas or reduce the flow rate of the gas when it is detected that there is fluid in the groove 100.

Various embodiments of individual components illustrated with reference to FIG. 1 to 6 may be combined with each other in any given manner to realize the advantage of this application.

This application has been described by the foregoing related embodiments, but the foregoing embodiments are only examples for implementing this application. It is to be pointed out that the disclosed embodiments do not limit the scope of this application. On the contrary, changes and modifications made without departing from the spirit and scope of this application fall within the protection scope of this application.

## Claims

1. An energy gathering cover (10) of a gas cooktop, comprising a groove (100) extending annularly, and **characterized in that**,
the energy gathering cover (10) further comprises a spilling-fluid detection end (110), and the spilling-fluid detection end (110) is disposed in the groove (100).

2. A gas cooktop, comprising:
a burner (2); and
a gas valve (3), configured to control the switch-on, switch-off, and flow rate of gas supplied to the burner (2); and
**characterized by** further comprising:
the energy gathering cover (10) of the gas cooktop according to claim 1, disposed surrounding the burner (2) of the gas cooktop; and
a control device (4), configured to control the gas valve (3) to switch off the gas or reduce the flow rate of the gas when the spilling-fluid detection end (110) detects that there is fluid in the groove (100).

3. A gas cooktop, comprising:
a burner (2); and
a gas valve (3), configured to control the switch-on, switch-off, and flow rate of gas supplied to the burner (2); and
**characterized by** further comprising:
an energy gathering cover (10), disposed surrounding the burner (2), wherein the energy gathering cover (10) comprises a groove (100) extending annularly; and
a spilling-proof safety device, configured to trigger the gas valve (3) to switch off the gas or reduce the flow rate of the gas when it is detected that there is fluid in the groove (100).

4. A pot holder (5) of a gas cooktop, comprising an annular body (11) and a plurality of supporting feet (12) connected to the annular body (11), the supporting feet (12) being configured to support a cooking appliance, the annular body (11) comprising a groove (100) extending annularly, and **characterized in that**,
the pot holder (5) further comprises a spilling-fluid detection end (110), and the spilling-fluid detection end (110) is disposed in the groove (100).

5. The pot holder (5) of the gas cooktop according to claim 4, **characterized in that** the spilling-fluid detection end (110) comprises at least one pair of electrodes (111), and top ends of the electrodes (111) protrude from an inner surface of the groove (100).

6. The pot holder (5) of the gas cooktop according to claim 4, **characterized in that** the spilling-fluid detection end (110) comprises two metal electrodes (111) without contact with each other and an insulated housing (112) wrapping the electrodes (111), and top ends of the electrodes (111) extend out of the housing (112).

7. The pot holder (5) of the gas cooktop according to any one of claims 4-6, **characterized in that** the pot holder (5) further comprises a connection portion (120) electrically connected to the spilling-fluid detection end (110), and the connection portion (120) protrudes downwards from the annular body (11).

8. The pot holder (5) of the gas cooktop according to claim 7, **characterized in that** the connection portion (120) is column-shaped.

9. The pot holder (5) of the gas cooktop according to claim 7, **characterized in that** the connection portion (120) is electrically connected to the inside of the gas cooktop in a plugging or contact manner.

10. The pot holder (5) of the gas cooktop according to claim 7, **characterized in that** the spilling-fluid detection end (110) comprises a plurality of pairs of electrodes (111) disposed at intervals.

11. The pot holder (5) of the gas cooktop according to claim 10, **characterized in that** the annular body (11) comprises a cavity portion (200), a wire cable (101) is arranged in the cavity portion (200), and the wire cable (101) is configured to electrically connect the plurality of pairs of electrodes (111) to the connection portion (120).

12. A gas cooktop, comprising:
a burner (2); and
a gas valve (3), configured to control the switch-on, switch-off, and flow rate of gas supplied to the burner (2); and
**characterized by** further comprising:
the pot holder (5) of the gas cooktop according to any one of claims 4-11, disposed surrounding the burner (2); and
a control device (4), configured to control the gas valve (3) to switch off the gas or reduce the flow rate of the gas when the spilling-fluid detection end (110) detects that there is fluid in the groove (100).

13. A gas cooktop, comprising:
a burner (2); and
a gas valve (3), configured to control the switch-on, switch-off, and flow rate of gas supplied to the burner (2); and
a pot holder (5), disposed surrounding the burner (2), wherein the pot holder (5) comprises an annular body (11) and a plurality of supporting feet (12) connected to the annular body (11), the supporting feet (12) are configured to support a cooking appliance, and the annular body (11) comprises a groove (100) extending annularly; and
**characterized by** further comprising:
a spilling-proof safety device, configured to trigger the gas valve (3) to switch off the gas or reduce the flow rate of the gas when it is detected that there is fluid in the groove (100).
